# NEUE EUROPÄISCHE PATENTSCHRIFT

(11) **EP 1 820 470 B2**
(45) Veröffentlichungstag und Bekanntmachung des Hinweises auf die Entscheidung über den Einspruch: **13.06.2012**
(45) Hinweis auf die Patenterteilung: 06.08.2008
(21) Anmeldenummer: 07001336.2
(22) Anmeldetag: 22.01.2007
(51) Int. Cl.: A61C 9/00

(54) **Vorrichtung zum Abtasten von einem Zahnmodell**
Device for scanning a tooth model
Dispositif destiné à palper un modèle de dent

(30) Priorität: 16.02.2006 EP 06003191; 10.01.2007 EP 07000466
(43) Veröffentlichungstag der Anmeldung: 22.08.2007
(73) Patentinhaber: Institut Straumann AG, 4002 Basel (CH)
(72) Erfinder: Holzner, Stefan, 80269 Hohenschäftlarn (DE); Weber, Gerhard, 86932 Pürgen (DE)
(74) Vertreter: Grünecker, Kinkeldey, Stockmair & Schwanhäusser

(56) Entgegenhaltungen:
- EP-A- 0 913 130
- EP-A- 1 710 536
- EP-A1- 1 757 902
- WO-A-02/39056
- DE-A1- 3 640 616
- DE-A1- 10 352 394
- DE-A1-102005 016 233
- DE-A1-102005 016 233
- US-A- 5 882 192
- US-A1- 0 201 856
- US-A1- 2002 110 786
- US-A1- 2005 060 868
- US-A1- 2005 095 551
- Ganz in Weiss, 18 dental dialoque, 6., 2005

## Beschreibung

Die Erfindung betrifft eine Vorrichtung zum Abtasten von einem Zahnmodell.

Bekannt sind Vorrichtungen zum Abtasten von Zahnmodellen, um einen Datensatz zu erhalten, der digital das Zahnmodell wiedergibt. Derartige Datensätze können zum automatisierten Herstellen von Zahnersatzteilen eingesetzt werden.

Falls verschiedene Datensätze jeweils nur einen Teil eines Modells wiedergeben, die beiden Datensätze jedoch einen Überlappungsbereich aufweisen, in dem sie denselben Teil des Modells darstellen, dann können die beiden Datensätze durch eine Matching-Verfahren zusammengefügt werden. Die Daten in dem Überlappungsbereich werden dazu verwendet die relative Anordnung der einzelnen Datensätze festzulegen bzw. zu ermitteln. Die Datensätze geben üblicherweise eine Oberflächenform in drei Dimensionen wieder. Das Matching wird daher als 3D-Matching bezeichnet. Mit dem Matching können auch eine größere Anzahl von Datensätzen wie etwa 5, 10, 15 oder 20 Datensätze zu einem einzelnen Datensatz zusammengesetzt werden.

Die Zahnmodelle können als sogenannte Sägezahnmodelle vorliegen. Diese Modelle verfügen über einen Modellteilhalter und herausnehmbare Modellteile. Die einzelnen Modellteile entsprechen einzelnen Abschnitten eines Gebissmodells, wie z.B. einem oder mehreren benachbarten Zähnen oder Zahnplätzen. Wenn die Modellteile von dem Modellteilhalter gehalten werden, geben sie ein Gebiss bzw. einen Teil davon wieder. Der Modellteilhalter definiert die relative Lage der einzelnen Modellteile zueinander.

Ein normales Gebiss eines Erwachsenen umfasst 32 Zahnplätze, 16 im Ober- und 16 im Unterkiefer. An jedem Zahnplatz ist normalerweise ein Zahn. An einem Zahnplatz kann jedoch auch ein Zahnersatzteil oder Teile davon oder Implantate oder Teile davon wie lmplantatspfosten oder ein Restzahnbereich oder ein Zahnfleischareal vorliegen. Bei einer Zahnlücke ergibt sich in der Regel ein Zahnfleischareal an dem Zahnplatz. Ein Zahn kann auch Zahnersatzteile umfassen wie etwa Füllungen, Inlays, Overlays oder Ähnliches. Ein Restzahnbereich kann ein defekter Zahn oder ein vom Zahnarzt präparierter Zahn (beschlifen) sein. Mehrere Zahnplätze können auch von einem Zahnersatzteil, wie etwa einer Brück besetzt sein.

Die EP 0913130 A2 offenbart ein Verfahren und eine Vorrichtung zur Herstellung eines Zahnersatzteils. Die US 2002/0110786 A1 offenbart eine Vorrichtung zum Herstellen einer angepassten Zahnprothese.

EP 1757902 A1 welche nur für die Neuheit relevanten Stand der Technik nach Art. 54(3) EPÜ darstellt offenbart ein Verfahren und Vorrichtung zur Formerfassung eines zahntechnischen Objekts.

Aufgabe der vorliegenden Erfindung ist es, bekannte Vorrichtungen zum Abtasten von Zahnmodellen zu verbessern.

Diese Aufgabe wird gelöst mir einer Vorrichtung nach Anspruch 1.

Bei einer Vorrichtung zum Abtasten eines Zahnmodells ist eine Kamera zum Aufnehmen von Bildern vorgesehen. Die Bilder können von Vorrichtungsteilen und/oder von einem oder mehreren Modellen, wie etwa Sägezahnmodellen oder Teilen davon erstellt werden.

Die Kamera ist teil einer Justagehilfe. Die Justagehilfe dient dazu, die Positionierung eines abzutastenden Zahnmodells zu erleichtern. Das Zahnmodell muss für eine gute Abtastung in einem bestimmten Bereich relativ zu einer entsprechenden Abtasteinrichtung angeordnet sein. Für diese Positionierung ist die Justagehilfe hilfreich.

Mit einer Kamera als Teil einer Justagehilfe kann diese Positionierung des Zahnmodells elektronisch unterstützt werden.

Die Kamera selber ist in definierter Lage zu einem Abtastbereich angeordnet und blickt auf eine Basisplatte der Vorrichtung zum Abtasten.

Die Vorrichtung umfasst eine Verdunklungseinrichtung die die abzutastenden Objekte abschattet und vor Umgebungslicht schützt. Dies verbessert die optische Abtastung.

Es ist jedoch auch möglich, dass die Kamera nicht in definierter Lage zum Abtastbereich angeordnet ist sondern vielmehr Markierungen vorgesehen sind, die in definierter Lage zu dem Abtastbereich angeordnet sind und von der Kamera erfasst werden können, so dass durch Auswertung des Kamerabildes die Position des Zahnmodells relativ zu solchen Markierungen und damit relativ zu dem Abtastbereich ermittelt werden kann.

In einer besonderen Ausführungsform wird in einer Bilddarstellung des Kamerabildes Information angezeigt, die eventuell notwendige Korrekturen der Positionierung des Zahnmodells auf einer Basisplatte erkennbar macht. Hier können beispielsweise Pfeile oder Linien in eine Bilddarstellung eingeblendet werden. Es können auch farbige Bereiche (beispielsweise grün oder rot für ordnungsgemäße oder nicht ordnungsgemäße Bereiche eingeblendet werden.

Auch kann eine Ist-Position zusammen mit einer Soll-Position dargestellt werden, wobei die Soll-Position beispielsweise durch Linien angedeutet wird. Diese sind vorzugsweise schematisch, d. h. sie betreffen nicht konkret ein zu positionierendes Zahnmodell, sondern geben vielmehr allgemein z.B. umrisshaft eine gewünschte Soll-Position an.

Die Justagehilfe kann zum Positionieren des Zahnmodells in einer horizontalen Ebene (x-/y-Ebene) bzw. in einer Oberflächenebene einer Basisplatte (x-/y-Ebene) vorgesehen sein. Sie kann jedoch auch alternativ oder zusätzlich dazu vorgesehen sein, die Höhe (z-Richtung) eines Zahnmodells einzujustieren.

Die Kamera blickt vorzugsweise auf eine Position eines Zahnmodells, welches sich im Abtastbereich der Abtasteinrichtung der Vorrichtung befindet. Dadurch kann das gesamte Zahnmodell mit der Kamera erkannt werden, was für eine Justage vorteilhaft ist.

In einer besonders vorteilhaften Ausführungsform ist die Kamera in oder an einem Deckel befestigt, wobei der Deckel zum Abdecken des Zahnmodells und/oder der Abtasteinrichtung dient. Der Deckel kann sowohl schwenkbar sein, als auch beispielsweise Teil einer Tunnelabdeckung sein, wobei die Abtasteinrichtung in den Tunnel geschoben wird, oder der Tunnel über die Abtasteinrichtung geschoben wird.

Derartige Deckel dienen z. B. zur Verdunklung der Anlage und/oder zum Schützen vor Staub o. ä.

Vorzugsweise ist der Deckel in zwei definierte Positionen bewegbar, wie eine geöffnete Stellung und eine geschlossene Stellung, wobei die Kamera in wenigstens einer der beiden Stellungen oder auch in beiden Stellungen auf die Position eines Zahnmodells im Abtastbereich gerichtet ist.

Hierbei kann beispielsweise vorgesehen sein, dass die Kamera an/in dem Deckel, der sich in einer geöffneten Stellung befindet, von oben auf ein Zahnmodell in einem Abtastbereich blickt, so dass die Position in eine x-/y-Ebene (Horizontalebene oder Ebene parallel zu einer Basisplatte) einjustiert werden kann.

Auch ist es möglich, dass die Kamera auch in einer geschlossenen Position des Deckels von oben auf ein Zahnmodell in dem Abtastbereich blickt.

In einer geöffneten Stellung kann die Kamera auch auf einen Teil außerhalb der Vorrichtung gerichtet sein, um zum Beispiel ein Bild eines Bedieners für eine Telefonkonferenz oder von sonstigen Modellen oder Teilen außerhalb der Einrichtung aufzunehmen.

Die Kamera kann auch herausnehmbar sein und in eine definierte Position wieder eingesetzt werden.

In der geschlossenen Stellung kann aber auch beispielsweise die Kamera dann durch die Bewegung des Deckels so angeordnet sein, dass auch die Höhe (z-Richtung) eingestellt werden kann.

Vorzugsweise sind Beleuchtungsmittel zum Beleuchten eines Zahnmodells in einer Abtastposition vorgesehen. Solche Beleuchtungsmittel können beispielsweise LED's umfassen. Mit den Beleuchtungsmitteln kann auch bei geschlossenem Deckel oder bei sonstigen schlechten Lichtverhältnissen das Zahnmodell beleuchtet werden und mit einer Kamera erkannt werden.

Die Kamera kann weiterhin zur Fernwartung eingesetzt werden.

Die Kamera ist weiterhin so ausgebildet, dass sie zweidimensionale Bilder aufnimmt (wie beispielsweise eine normale (Digital-) Fotokamera).

Es können weiterhin Justiermittel vorgesehen sein, mit denen ein Bediener die Position des Zahnmodells zur Justage verändern kann. So kann ein Zahnmodell beispielsweise mit Magnetkraft eines Halters auf einer Basisplatte gehalten werden, wobei durch Verändem der Position des Halters die Position des Zahnmodells verändert werden kann. Auch können elektrisch ansteuerbare (oder auch pneumatisch oder hydraulisch oder sonst wie ansteuerbare) Justiermittel vorgesehen sein (wie etwa Stellmotoren, die ein Platte oder einen Halter bewegen können), die von einem Computer angesteuert werden können. Dann kann die Positionierung bzw. Justage des Zahnmodells in Bezug auf den Abtastbereich auch von einem Computer oder zumindest mit Unterstützung eines Computers durchgeführt werden.

Durch den Einsatz einer Kamera, deren Bilder elektronisch ausgewertet werden können, kann dann auch eine Justage vollautomatisch erfolgen, falls das Ergebnis der Bildauswertung dazu verwendet wird, die über einen Computer ansteuerbaren Justiermittel anzusteuern.

Die Kamera hat vorzugsweise mindestens 10.000, 100.000 oder 1.000.000 Pixel. Eine derartige Pixel-Anzahl ist ausreichend, um die Justage des Zahnmodells vorzunehmen.

Das Zahnmodell ist vorzugsweise ein Sägezahnmodell.

Eine derartige Vorrichtung mit einer Kamera kann mit jedem Merkmal der nachfolgend beschriebenen Vorrichtungen kombiniert werden.

Bei einer Vorrichtung ist eine optische Abtasteinrichtung vorgesehen, mit der ein Modell in einem Abtastbereich abgetastet werden kann. Die Breite des Abtastbereichs kann zwischen 5 mm und 100 mm liegen. In diesem Intervall ergibt sich eine gute Auflösung der Daten zusammen mit einem genügend großen Abtastbereich des Modells. Die untere Grenze kann auch 10, 15, 20, 25, 30, 35, 40, 45, 50, 55, 60, 65, 70, 75 mm sein. Die obere Grenze kann auch 10, 15, 20, 25, 30, 35, 40, 45, 50, 55, 60, 65, 70, 75, 80, 85, 90, 95 mm sein.

Mit der Abtasteinrichtung kann ein Scan angefertigt werden, die sich über mehre Modellteile erstreckt. Damit kann die relative Lage der Modellteile gegeneinander bestimmt werden. Ein solcher Scan kann auch als Übersichtsscan bezeichnet werden. Die Modellteile sind dabei in den Modellteilhalter des Sägezahnmodells eingesteckt.

Weiterhin kann ein zweiter Scan (Einzelscan) oder mehrere davon angefertigt werden, der ein einzelnes Modellteil abtastet. Dieser Scan wird bevorzugter weise an einem Modellteil durchgeführt, das aus dem Modellteilhalter des Sägezahnmodells herausgenommen wurde. Das Modellteil wird dabei unabhängig von dem Modellteilhalter des Sägezahnmodells gehalten. Das Modellteil kann aber auch in dem Modellteilhalter eingesteckt sein. Die benachbarten Modellteile sollten dabei allerdings herausgenommen sein, um die optisch Zugänglichkeit zu dem Modellteil zu verbessern.

Die Daten des ersten Scans uns des zweiten Scans können unterschiedliche Auflösung aufweisen. Die Daten des Übersichtsscans können z. B. etwas gröber sein, als die des Einzelscans. Sie können jedoch auch die gleiche Auflösung oder eine höhere Auflösung aufweisen.

Die Daten des Einzelscans werden die Form eines Modellteils in der Regel vollständiger wiedergeben, als die des Übersichtsscans, da keine Abschattungen durch benachbarte Modellteile gegeben sind. Der Einzelscan ist in sofern vollständiger als Übersichtsscan.

Die ersten und zweiten Daten können gespeichert werden und von einer Einrichtung zum 3D-Matchen verarbeitet werden, um einen einzelnen Datensatz von dem Sägzahnmodell bzw. einem Abschnitt davon zu erhalten.

Die Vorrichtung weist eine Basisplatte auf. Die Basisplatte ist vorzugsweise auf der Oberseite im wesentlichen eben. Sie kann aber auch Vertiefungen wie Rillen, Nuten, Löcher oder Ähnliches und/oder Erhöhungen wie Stifte in der ebenen Oberseite umfassen. Damit können zum Beispiel andere Elemente wie ein Adapter und/oder ein Halter mit der Basisplatte gekoppelt werden.

Weiter umfasst die Vorrichtung eine Haltevorrichtung, mit der ein Sägezahnmodell ein Modellteil oder mehrere Modellteile oder Kombinationen davon gehalten werden können. Die Basisplatte zusammen mit der Haltevorrichtung erlaubt eine große Flexibilität bei der Anordnung der abzutastenden Objekte relativ zu dem Abtastbereich.

Die Basisplatte und die Haltevorrichtung sind vorzugsweise so ausgebildet, dass die Haltevorrichtung auf der Basisplatte an jeder beliebigen Position angeordnet werden kann. Die Basisplatte kann auch eine oder mehrere Rasteinrichtungen umfassen, in die ein Halter eingerastet werden kann. Die Basisplatte kann auch in einem Raster angeordnete Elemente aufweisen, die die Anordnung der Haltevorrichtung an verschiedenen definierten Rasterpositionen ermöglicht. Die Elemente (Löcher, Stifte, etc.) sind vorzugsweise periodisch angeordnet.

Die Basisplatte ist vorzugsweise relativ zu dem Abtastbereich drehbar. Damit können verschiedene Bereiche des Modells abgetastet bzw. der Abtastung zugänglich gemacht werden. Die Basisplatte kann die Form eines Drehtellers aufweisen. So ist sie gut in eine kreisrunde Öffnung einer Umgebungsplatte einpassbar.

Die Basisplatte ist vorzugsweise geradlinig verfahrbar. Damit können verschiedene Bereiche dem Abtasten zugänglich gemacht werden. Die geradlinige Verfahrbarkeit ist vorzugsweise in eine oder zwei Richtungen (bevorzugt senkrecht zueinander) gegeben.

Die Basisplatte ist vorzugsweise höhenverstellbar. Damit kann zum einen erreicht werden, dass sich das abzutastende Objekt in einem geeigneten Abstand zu der optischen Abtasteinrichtung befindet. Dies kann z. B. für die Fokussierung einer Beleuchtungsoptik oder einer Aufnahmeoptik relevant sein. Andererseits wird durch die Höhe der Basisplatte auch die Relation zwischen Drehpunkt der Basisplatte und dem Abtastbereich auf der Basisplatte verändert (s.u.).

Bevorzugt ist die Möglichkeit die Haltevorrichtung mittels Magnetkraft auf der Basisplatte zu halten. Die Kraft ist in der Regel ausreichend hoch, um ein unbeabsichtigtes Versetzten der Haltevorrichtung z. B. bei einem Scan zu verhindern. Eine solche Fixierung der Haltevorrichtung ist auch gut werkzeuglos lösbar. Weiter erlaubt sie eine Anordnung der Haltevorrichtung auf der Basisplatte an jeder beliebigen Stelle und Orientierung.

Die Haltevorrichtung kann das abzutastenden Objekt vorzugsweise in verschiedenen Höhen über der Basisplatte halten. Hierfür können verschiedene Haltevorrichtungen mit verschiedenen Höhen oder höhenverstellbare Haltevorrichtungen vorgesehen sein. Dadurch lässt sich der Abstand zwischen abzutastendem Objekt und Abtasteinrichtung ändern und auch die Relation zwischen Basisplatte und Abtastbereich (s.u.).

Aus der DE 103 04 111 A1 ist ein Phaseshift-Abtastverfahren bekannt, das hier eingesetzt werden kann. Auf dieses Dokument und das darin beschriebene Abtastverfahren sowie eine entsprechend ausgebildete Vorrichtung wird vollumfänglich Bezug genommen und dessen Offenbarung hier mit aufgenommen. Auch sind Laserlinien-Abtastverfahren bekannt, bei denen eine Laserlinie auf ein Objekt gerichtet wird und unter einen Triangluationswinkel das Objekt erfasst und aus dem Laserlinienabbild auf das Höhenprofil geschlossen werden kann.

Der Abtastbereich einer Phaseshift-Abtastung kann quadratisch oder rechteckig sein (gesehen von oben auf die Basisplatte). Die Kantenlänge des Quadrats oder die Kantenlänge jeder der Rechteckseiten kann 5, 10, 15, 20, 25, 30, 35, 40, 45, 50, 55, 60, 65, 70, 75, 80, 85, 90, 95, 100, 110, 120 oder 130 mm sein oder zwischen einem aus diesen Werten gebildeten Intervall liegen. Alle möglichen Intervallkombinationen aus den obigen Werten sind möglich.

Die Vorrichtung weist vorteilhafter weise eine Verlagereinrichtung auf, mit der eine Drehachse relativ zu dem Abtastbereich verlagert werden kann. Damit kann zum einen eine Drehachse außerhalb des Abtastbereichs als auch innerhalb des Abtastbereichs geschaffen werden. Ersteres ermöglicht es den Mittelpunkt eines Zahnbogens auf oder bei der Drehachse anzuordnen während sich der Zahnbogen selber in dem Abtastbereich befindet. Im zweiten Fall kann ein Modellteilmittelpunkt auf oder bei der Drehachse angeordnet werden, wobei sich dieser Modellteilmittelpunkt in Abtastbereich befindet.

Zum Verschieben der Achse kann ein oder mehre Linearverschiebetische oder auch ein Adapter vorgesehen sein. Die Drehachse kann auch zusätzlich oder alternativ gekippt werden, da dadurch andere Blickwinkel einer Abtasteinrichtung auf ein abzutastendes Zahnmodell ermöglicht werden. Der Adapter verfügt über ein Drehelement, das durch den Adapter mechanisch mit der Basisplatte gekoppelt wird, sodass bei einer Drehung der Basisplatte das Drehelement dreht. Das Drehelement kann dann eine im Vergleich zu der Drehachse der Basisplatte verlagerte Drehachse aufweisen.

Falls der Abtastbereich eine Ebene definiert, in der der Abtastbereich liegt, so ist insbesondere eine Verlagerung der Drehachse entlang oder parallel zu der Ebene vorteilhaft. Dies kann auch unabhängig von einer eventuellen Verlagerungskomponente in einer Richtung quer zu der Ebene erfolgen.

Weiterhin ist eine Justagehilfe vorgesehen. Diese gibt in etwa vor, an welcher Stelle ein Sägezahnmodell oder ein Modellteil angeordnet werden soll. Dies betrifft sowohl die Höhe als auch die Position in der Oberflächenebene der Basisplatte relativ zu der Basisplatte. Für die Höhe und die Position können auch verschiedene Justagehilfen vorgesehen sein.

Die Justagehilfe für die Höhe kann z.B. auf die Basisplatte oder eine die Basisplatte umgebende Platte aufgestellt werden und mit einer Markierung die bevorzugte Höhe oder mit mehreren Markierungen einen möglichen Höhenbereich angeben. Bei dem Modell kann z. B. die Zahnfleischgrenze oder die Präparationsgrenze oder das obere Ende des Modells in Bezug auf die Höhenjustagehilfe angeordnet werden.

Die Justagehilfe für die Position kann eine durchsichtige Scheibe umfassen, auf der Markierungen wie etwa Linien oder Punkte angegeben sind, die bestimmte Referenzpunkte des Modells angeben. Die Scheibe kann oberhalb von der Basisplatte angeordnet werden und das Modell zum Einjustieren durch die Scheibe mit den Markierungen beobachtet werden.

Die Justagehilfe umfasst eine Kamera, die in definierter Lage zu dem Abtastbereich angeordnet ist und die auf die Basisplatte blickt. In einer Bilddarstellung des Kamerabildes können Informationen angezeigt werden, wie etwa Linien oder Pfeile mit denen notwendige Korrekturen der Positionierung des Modells auf der Basisplatte erkennbar gemacht werden. Z.B. kann eine Sollposition zusammen mit der Istposition dargestellt werden. Die Sollposition kann auch durch schematische Linien angedeutet werden.

Eine andere Vorrichtung zum Abtasten eines Zahnmodells verfügt über eine Haltevorrichtung, mit der ein Sägezahnmodell abgetastet werden kann.

Zum Herstellen von Zahnersatzteilen, wie etwa Brücken oder Ähnlichem, ist es üblicherweise nötig, sowohl die relative Anordnung von beispielsweise zwei benachbarten Elementen (etwa zwei Zähnen) zu erfassen, gleichzeitig jedoch auch die Form jedes einzelnen Zahns zu erfassen. Durch Abschattungseffekte ist es jedoch schwierig, die Form eines Zahns vollumfänglich gut zu erfassen, wenn beide Zähne nebeneinander angeordnet sind. Eine Erfassung mit den Zähnen nebeneinander ist jedoch nötig, um die relative Anordnung der beiden Zähne nebeneinander zu erfassen.

Von daher ist es vorteilhaft, wenn zum Einen ein Abtasten durchgeführt wird, wenn die verschiedenen Zähne in ihrer relativen Position zueinander definiert vorgegeben sind (Übersichtsscan) und anschließend ein Abtasten von jedem Einzelzahn, um dessen Form vollumfänglich gut zu erfassen (Einzelscan).

Bei der Vorrichtung ist lediglich eine Haltevorrichtung vorgesehen, mit der jedoch sowohl mehrere Zähne in ihrer relativen Position zueinander angeordnet gehalten werden können und gleichzeitig jedoch auch einzelne Zähne gehalten werden können, ohne dass hierfür zwei verschiedene Haltevorrichtungen notwendig sind.

Wenn in Vorangehendem oder im Folgenden von einem Zahn oder Zähnen gesprochen wurde, so gelten die Ausführungen selbstverständlich auch entsprechend für Zahnersatzteile, Restzahnbereiche, Zahnfleischareale oder Kombinationen davon, wie etwa einem Zahn und einem Zahnersatzteil, das benachbart dazu angeordnet ist. Zahnersatzteile können beispielsweise Implantate, Implantatspfosten, Brücken, Inlays, Overlays oder Ähnliches sein.

Die Haltevorrichtung umfasst vorteilhafter weise eine verformbare Masse zum Halten, wie etwa eine Knetmasse oder Wachs. In eine Knetmasse können Stifte von Zahnmodellen, wie sie in Sägezahnmodellen verwendet werden, gut eingedrückt werden, um so ein Zahnmodell zu erhalten. Weiterhin ist es auch möglich, auf eine Knetmasse ein größeres Modellstück aufzusetzen (auch ohne dass dieses über Stifte verfügt), wobei die verformbare Masse vorzugsweise eine genügende Klebewirkung aufweist, um dieses Modell zu halten. Die verformbare Masse ist vorteilhafter weise in einem Topf oder auf einer Platte angeordnet. Diese Platte oder dieser Topf können auf der Basisplatte 7 angeordnet werden oder die Basisplatte sein. Im ersten Fall kann ein Magnet zum Halten der Haltevorrichtung auf der Basisplatte vorgesehen sein.

Die vorab beschriebene Haltevorrichtung kann unabhängig von der Vorrichtung mit einer Basisplatte vorteilhaft sein. Sie kann jedoch auch in Kombination damit eingesetzt werden. Dabei ist dann beispielsweise die Haltevorrichtung mit der verformbaren Masse auf der Basisplatte anbringbar.

In einer anderen Ausführungsform einer Vorrichtung zum Abtasten von Zahnmodellen weist die Vorrichtung eine Beschickungsanlage auf. Mit der Beschickungsanlage können mehrere Zahnmodelle und/oder Einzelteile eines Zahnmodells nacheinander oder gleichzeitig einem Halter zugeführt werden. Dieser Halter kann beispielsweise ein wie oben beschriebener Halter aus einer verformbaren Masse sein.

Die Beschickungsanlage umfasst vorteilhafter weise eine oder mehrere Kameras, mit der die Position der Zahnmodelle und/oder der Teile eines Zahnmodells, wie etwa der Teil eines Sägezahnmodells, erfasst werden können. Aufgrund der von den Kameras aufgenommenen Bildern kann ermittelt werden, an welcher Stelle aufzunehmende Teile sind.

Für das Einsetzen von Zahnmodellen oder Teilen eines Zahlmodells in den Halter ist vorteilhafter weise ein Roboterarm vorgesehen. Mit den Kameras und dem Roboterarm kann eine vollautomatische Beschickung der Vorrichtung zum Abtasten von Zahnmodellen erfolgen. Auch andere Möglichkeiten zur Beschickung sind möglich. Beispielsweise können die Zahnmodelle auch mit einem Förderband in die Vorrichtung zum Abtasten überführt werden. Auch Schieber oder Ähnliches sind zum Bewegen der Zahnmodelle möglich.

Bei einem Verfahren zum Abtasten eines Sägezahnmodells sind folgende Schritte vorgesehen. Die verschiedenen Modellteile eines Sägezahnmodells werden von einem Modellteilhalter gehalten und in dieser Konfiguration abgetastet. In einem weiteren Schritt werden eine oder mehrere der Modellteile abgetastet, wobei hierbei jedes Modellteil unabhängig von den anderen Modellteilen erfasst werden kann. Die beiden Schritte können in beliebiger Reihenfolge durchgeführt werden.

Die Verwendung eines Sägezahnmodells mit einzelnen Modellteilen und einem Modellhalter hat den Vorteil, dass unmittelbar nacheinander die Modellteile, die von dem Modellhalter gehalten werden, abgetastet werden können und direkt danach die einzelnen Modellteile abgetastet werden können. Ein Zersägen eines einteiligen Zahnmodells zwischen zwei Abtastvorgängen ist somit nicht nötig, so dass das Abtasten einfach und schnell durchgeführt werden kann.

In einer vorteilhaften Ausführungsform des Verfahrens werden sowohl Innenseite als auch Außenseite des Sägezahnmodells abgetastet. Dadurch ergibt sich ein guter Gesamtüberblick über das Zahnmodell. Die von den einzelnen Modellteilen gewonnenen Daten können mit den Daten, die von den in den Modellteilhalter eingesteckten Modellteilen gewonnenen wurden mittels Datenverarbeitung zusammengebracht (Matching) werden. Hierfür ist an sich das Abtasten der Außenseite oder der Innenseite eines Sägezahnmodells ausreichend. Jedoch ergibt sich durch die Verwendung von Daten, die sowohl die Außenseite als auch die Innenseite des Sägezahnmodells betreffen, eine verbesserte Gesamtdarstellung des Zahnmodells und auch ein verbessertes Matching-Ergebnis.

Das Abtasten des Sägezahnmodells im ersten erwähnten Schritt kann durch das Abtasten von mehreren Einzelbereichen erfolgen, die sich jeweils über mehrere Zahnplätze erstrecken. So ist es beispielsweise möglich, ein Modell, das einen gesamten Ober- oder Unterkiefer repräsentiert, mit 3, 4, 5 oder 6 Einzelbereichen auf der Außenseite und einer entsprechenden oder anderen Anzahl auf der Innenseite abzutasten.

Zwischen dem Abtasten der verschiedenen Einzelbereiche kann das Modell verschoben und/oder gedreht werden, um einen guten Zugang zu den jeweils abzutastenden Bereichen zu erhalten.

Jede der Vorrichtungen kann über einen Internetanschluss verfügen. Damit sind Internet-Updates möglich. Auch wird dadurch die Fernwartung der Vorrichtung erleichtert, bzw. ermöglicht.

Weiter kann jede der Vorrichtungen eine zusätzliche Kamera umfassen, die verschiedene Teile der Vorrichtung und/oder Modelle abbilden kann. Die Kamera kann zur Fernwartung eingesetzt werden. Auch eine bereits vorhandene Kamera (z.B. aus der Justage oder Bildgewinnung in der Beschickungsanlage) kann hierfür eingesetzt werden. Die Kamera nimmt bevorzugt 2D-Bilder auf.

Auf die deutsche Patentanmeldung DE10 2005 016 233 "Verfahren und Vorrichtung bezüglich der Datenübermittlung bei der Herstellung von Zahnersatzteilen" vom 8.4.2005 vom selben Anmelder wird vollumfänglich Bezug genommen. Die dort aufgeführten Merkmale einer Abtastvorrichtung zum Gewinnen von Datensätzen können jedes für sich oder in beliebiger Kombination bei der Vorrichtung dieser Anmeldung vorgesehen sein. Insbesondere die Datenfemübertragungsmittel mit der Kamera zum Übertragen von digitalen Bilddaten und vorteilhafte Ausführungsformen davon aus der deutschen Anmeldung (s. z. B. Ansprüche 16 bis 18 davon) können bei der Vorrichtung dieser Anmeldung vorgesehen sein. Auch die in der deutschen Anmeldung beschriebenen Verfahren (s. z. B. Ansprüche 1 bis 15) können mit der Vorrichtung dieser Anmeldung durchgeführt werden bzw. entsprechende Mittel dazu vorgesehen sein.

Vorteilhafte Ausführungsformen der Vorrichtung des Verfahrens werden anhand der Figuren erläutert werden. Dabei zeigt:
- Fig. 1: schematische Darstellungen einer Vorrichtung zum Abtasten von Zahnmodellen,
- Fig. 2: schematische Darstellungen der Draufsicht auf eine Basisplatte und Seitenansichten mit einem Sägezahnmodell und einem Modellteil,
- Fig. 3: verschiedene schematische Schnittzeichnungen von Adaptern,
- Fig. 4: verschiedene schematische Darstellungen eines Halters,
- Fig. 5: verschiedene Verfahrenszustände bei Durchführung des Verfahrens,
- Fig. 6: eine schematische Darstellung einer Beschickungseinrichtung,
- Fig. 7: eine schematische Darstellung einer Vorrichtung mit Kamera und Deckel.

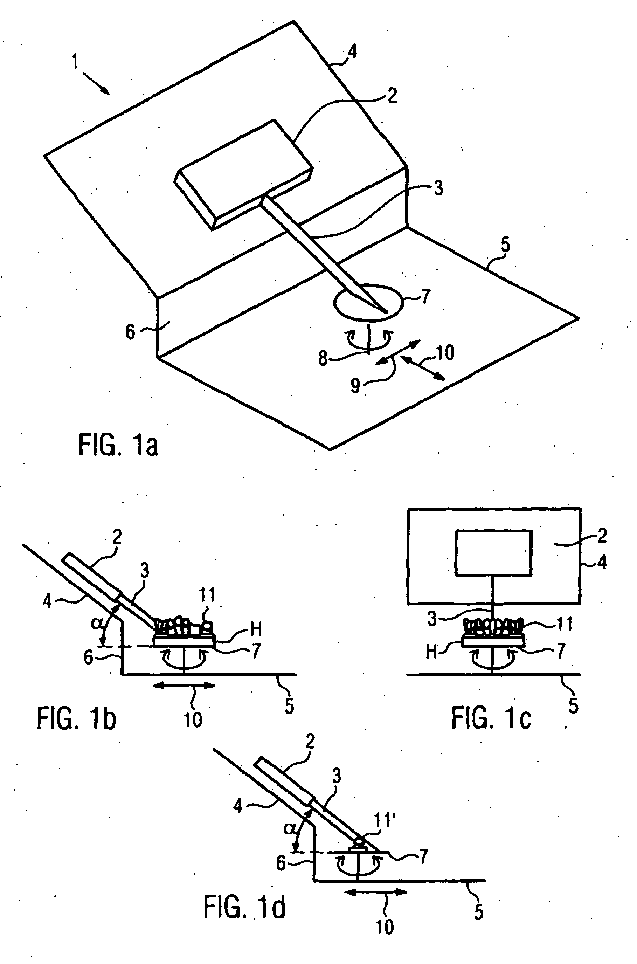

In Fig. 1 a ist eine Vorrichtung 1 zum Abtasten von Zahnmodellen in einer dreidimensionalen schematischen Darstellung gezeigt. Das Gerät verfügt über eine Grundplatte 5, an der über einen Träger 6 eine schräg angestellte zweite Grundplatte 4 angeordnet ist. Die Grundplatte 4 ist in einem Winkel von 20° bis 80°, oder 35° bis 60°, bevorzugter Weise ca. 45° zu der Grundplatte 5 angeordnet. Die Grundplatte 4 trägt ein optisches Abtastsystem 2, das mit einem streifenförmigen Abtastbereich 3 Modelle abtasten kann. Der streifenförmige Abtastbereich 3 steht ebenfalls in einem Winkel von 20° bis 80°, bevorzugt 35° bis 60°, noch bevorzugter ca. 45° oder mehr oder weniger als 45° zu der Grundplatte 5 bzw. Basisplatte 7.

Der Weg des Laserlichts zum Beleuchten des Modells mit der Laserlinie definiert bei der Laserlinienabtastung den Abtastbereich 3.

Bei einer Laserlinienabtastung wird eine Ebene durch das Licht der Laserlinie definiert. Bei einer Phaseshift-Abtastung wird eine Ebene durch die Mitte des Beleuchtungslichts definiert. In der Regel liegt in dieser Ebene auch die Blickrichtung der Beobachtungskamera des Phaseshift-Verfahrens. Die Blickrichtung schließt mit der Oberfläche der Basisplatte bevorzugt einen Winkel von 20° bis 80° ein. In diesem Fall definiert die Blickrichtung den Abtastbereich. Beleuchtung und Kamera können auch ausgetauscht werden. In diesem Fall wird der Abtastbereich durch die Beleuchtung definiert. Die zentrale (optische) Achse der Beleuchtung hat dann einen Winkel von 20° bis 80° mit der Oberfläche der Basisplatte. Die Winkel können auch zwischen 35° und 60° oder bei ca. 45° oder über oder unter 45° liegen.

Das Modell kann auf einer Basisplatte 7 angeordnet werden. Die Basisplatte 7 ist als Drehteller ausgeführt und weist eine Drehachse 8 auf, wobei der Drehteller 7 in beide Richtungen oder auch nur in einer Richtung um die Achse 8 gedreht werden kann.

Die Achse 8 kann in Richtungen 9 und 10 verschoben werden. Die Grundplatte 5 kann dazu entsprechende Aussparungen aufweisen, so dass es sich vielmehr um einen Rahmen handelt. Richtung 9 liegt in einer Richtung quer zu der Ebene, die durch den Abtaststreifen 3 definiert wird. Die Richtung 10 liegt in dieser Ebene und senkrecht zu der Richtung 9. Durch Bewegen der Achse 8 in Richtung 9 kann ein Modell auf den Drehteller 7 in Richtung quer zu dem Streifen 3 verschoben werden. Dadurch kann ein Bereich des Modells abgetastet werden. Durch ein Verschieben der Achse 8 in Richtung 10 kann derjenige Bereich, der beim Verschieben in Richtung 9 abgetastet wird, verändert werden.

Fig. 1b zeigt einen Blick auf die Vorrichtung aus Fig. 1a, parallel zu den Grundplatten 4 und 5. Fig. 1c zeigt einen Blick auf die Vorrichtung aus Fig. 1 a entlang Richtung 10.

Zwischen der Oberfläche der Basisplatte 7 und dem Abtastbereich 3 ist ein Winkel alpha eingeschlossen (Fig. 1b und 1d) . Dieser beträgt z.B. zwischen 20° und 80°, 35° bis 60° oder bevorzugt ca. 45°. Dieser Winkel erlaubt eine besonders gute Darstellung und Abtastung der Präparationsgrenze. Dort ist eine besonders genaue Abtastung des Modells für gut abschließende Zahneratzteile wünschenswert.

Wie in Figur 1b zu erkennen kann durch eine Veränderung der Höhe der Basisplatte 7 oder des Modells 11 über der Basisplatte 7 die Relation zwischen Drehpunkt des Modells und des Abtastbereichs 3 verändert werden. Bei dem in Fig. 1b dargestellten Fall wird ein Bereich des Modells außerhalb von dem Drehpunkt des Modells abgetastet. Würde das Modell weiter unten angeordnet, würde der Abtastbereich 3 einen auf der Basisplatte 7 weiter innen liegenden Bereich abtasten, der näher oder bei der Drehachse 8 liegt.

Auf der Basisplatte 7 ist ein Halter H angeordnet, der ein Sägezahnmodell 11 hält. Der Halter H kann beispielsweise Knetmasse sein.

Während in Fig. 1 eine Ausführungsform gezeigt ist, bei der der Drehteller 7 fest mit der Drehachse 8 verbunden ist, und die Drehachse durch Verschieben in Richtung 9 und 10 mit beispielsweise X-, Y-Tischen verlagert wird, sind auch andere Konfigurationen denkbar. Beispielsweise kann eine Drehvorrichtung lösbar mit dem Drehteller 7 verbunden werden. Hierzu kann beispielsweise ein Elektromagnet unterhalb von dem Drehteller 7 an der Achse 8 ein- oder ausgeschaltet werden bzw. von dem Drehteller weg oder auf diesen zu bewegt werden, um die magnetische Kopplung zu erhöhen. Dafür kann auch ein Permanentmagnet vorgesehen werden. Auch eine Saugvorrichtung, die den Drehteller mit Unterdruck an verschiedenen Positionen für die Drehung fixiert, kann vorgesehen sein.

Zur Verlagerung der Drehachse wird die Verbindung zwischen Drehachse und Drehteller gelöst, die Drehachse verschoben (in Richtung 9 oder 10) und die Verbindung zwischen Drehachse und Drehteller dann an einem anderen Ort wiederhergestellt. Die Verbindung kann mit dem Elektromagneten, einem Permanentmagneten oder einer Saugvorrichtung oder ähnlichem hergestellt werden. Der Drehteller 7 kann, während er nicht durch die Drehachse 8 gehalten wird, auf einer Auflage aufliegen, die eine Öffnung hat, durch die die Drehachse 8 hindurchgeführt werden kann, die jedoch den äußeren Umfang des Drehtellers 7 stützt. Mit dieser Konfiguration sind Rotationen des Drehtellers 7 um andere Achsen als den Mittelpunkt des Drehtellers 7 möglich.

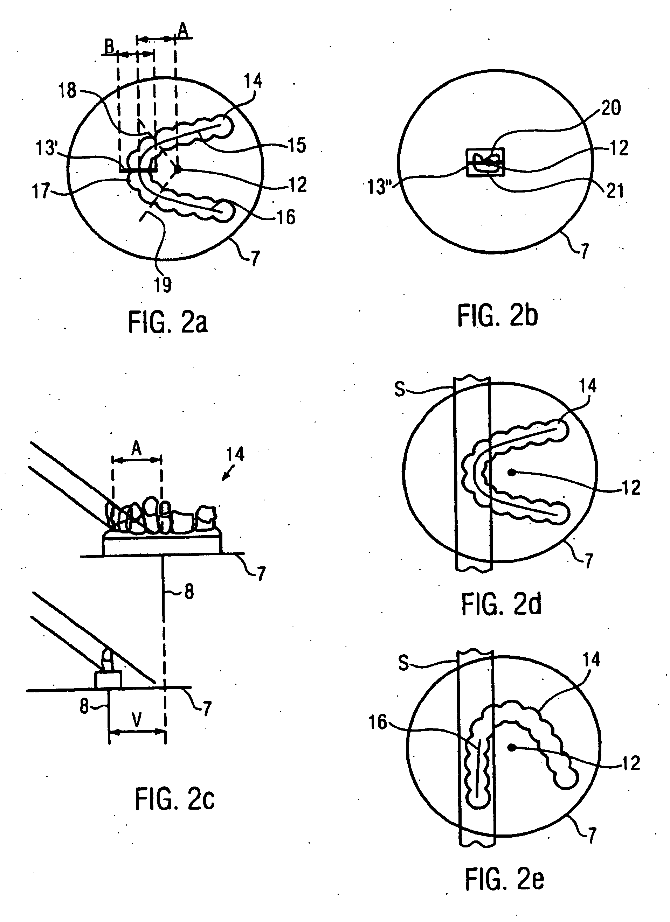

In Fig. 2a ist ein Zahnmodell 14 auf einem Drehteller 7 gezeigt. Das Zahnmodell 14 weist zwei im Wesentlichen lineare Stücke 15, 16 auf, die mit einem kreislinienförmigen Stück 17 (Zahnbogen) verbunden sind. Der Mittelpunkt des kreislinienförmigen Stücks 17 trägt die Bezugsziffer 12. Praktisch sämtliche Gebisse von Menschen weisen eine solche Konfiguration auf. Der Übergang zwischen den linearen Stücken 15, 16 und dem kreisbogenförmigen Stück 17 ist durch die gestrichelten Linien 18 und 19 gekennzeichnet.

Um das kreisbogenförmige Stück 17 abzutasten, ist es vorteilhaft, den Drehteller 7 um den Mittelpunkt 12 zu drehen. Der von dem streifenförmigen Scanbereich 3 erfassbare Bereich ist mit dem Strich mit der Bezugsziffer 13' bezeichnet. Er hat eine Breite B, die in der Ebene der Basisplatte 7 gemessen wird und zwischen 5 mm und 80 mm beträgt. Durch Rotation des Drehtellers 7 kann der zwischen den gestrichelten Geraden 18, 19 liegende Bereich des Zahnmodells 14 eingescannt werden. Hierbei ist zu beachten, dass der Mittelpunkt 12 außerhalb von dem durch den Abtastbereich erfassbaren Bereich 13' liegt. Die Drehachse des Drehtellers 7 liegt hier möglichst nahe oder auf dem Mittelpunkt 12 des kreislinienförmigen Stückes 17. Der Abstand zwischen 12 und der Mitte des Scanbereichs B ist mit A bezeichnet.

Das Abtasten kann sowohl während der Drehung des Drehtellers 7 vorgenommen werden oder auch durch ein (vorzugsweise lineares) Verschieben in Richtung quer zum Abtastbereich (In Fig. 2a nach oben bzw. nach unten). Im letzten Fall kann das Stück 17 durch Abtasten von Einzelbereichen abgetastet werden, wobei die Daten der Einzelbereiche durch eine jeweilige Überlappung von benachbarten Bereichen miteinander mit einem Matching-verfahren verbunden werden können. Zwischen dem Abtasten dieser Einzelbereiche wird der Drehteller um seine Drehachse ein Stück weiter gedreht, um den nächsten Einzelbereich abzutasten und dadurch nach und nach das Stück 17 insgesamt abgetastet zu haben. Diese zusammengesetzten Daten bilden die Daten des Übersichtsscans.

Bei dem in Fig. 2b dargestellten Fall ist auf dem Drehteller 7 ein Modell 20 eines Einzelzahns 21 angeordnet. Die Spitze des Zahn trägt die Bezugsziffer 12. Um das Modell des Zahns 21 gut und von allen Seiten abzutasten, sollte der Zahn im Vergleich zum Abtastbereich gedreht werden können. Dazu ist eine Drehung um den Punkt 12 vorteilhaft. Hierbei ist es jedoch sinnvoll, dass der Scanbereich 13" bei der gewünschten Drehachse 12 liegt.

Durch eine Verlagerung der Drehachse des Drehtellers relativ zu dem Abtastbereich ist es möglich, sowohl eine Konfiguration (zwischen Drehachse und Abtastbereich) wie sie in Fig. 2a dargestellt ist, als auch eine Konfiguration, wie sie in Fig. 2b dargestellt ist, zu erreichen. Entsprechendes ist auch mit einer Höhenverstellung der Basisplatte und/oder einer Haltevorrichtung möglich.

In Fig. 2c ist oben der Fall dargestellt, bei dem ein Übersichtsscan des Sägezahnmodells erstellt werden soll. Die Drehachse 8 ist in etwa bei dem Mittelpunkt 12 des Zahnbogens 17. Der Abtastbereich liegt bei dem Zahnbogen. In Fig. 2c unten ist ein Modellteil eines einzelnen Zahns bei der Drehachse 8 angeordnet. Er kann somit gedreht werden, ohne den Abtastbereich zu verlassen. Die Drehachse 8 muss hierzu im Vergleich zu Fig. 2c oben um den Betrag V verlagert werden. V beträgt z.B. 22,5 mm.

Durch Verschieben der Basisplatte 7 unter dem Scanbereich 13 hindurch in einer Richtung quer zu dem Scanbereich 13 kann ein streifenförmiger Bereich auf der Basisplatte abgetastet werden. Dieser ist in Fig. 2d mit Bezugszeichen S versehen. Wie zu erkennen, kann der Zahnbogen recht gut abgetastet werden. Durch Drehung um dem Zahnbogenmittelpunkt 12 kann der geradlinige Teil 16 (bzw. zumindest seine Außenseite) vollständig in den Streifen S gebracht werden und in bevorzugter weise in einem Zug abgetastet werden.

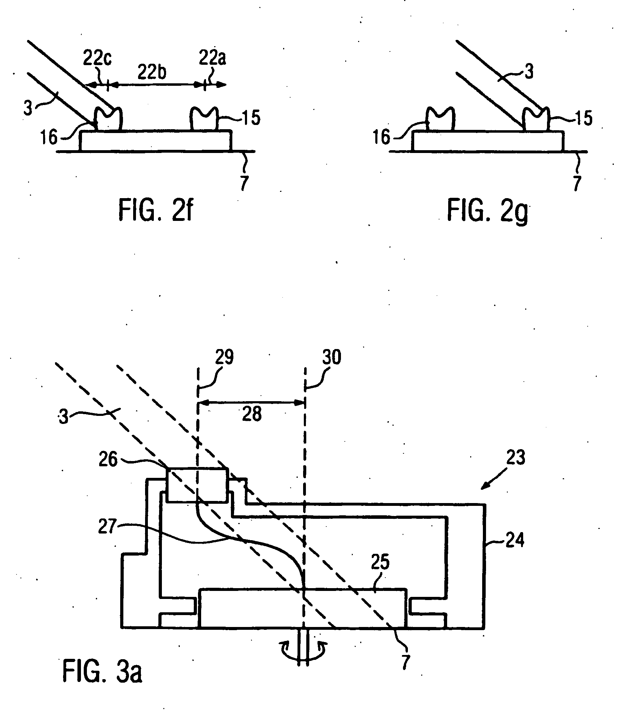

Falls es gewünscht ist sowohl den Außenbereich des Modells 14 als auch den Innenbereich abzutasten so ist ebenfalls eine Verlagerung des Drehtellers vorteilhaft. In Fig. 2f und Fig. 2g ist der Drehteller 7 in Schnittansicht gezeigt. Das Modell 14 ist im Vergleich zu Figur 2a um ca. 90° im Uhrzeigersinn gedreht worden. Der Außenbereich des Zahnmodells ist mit Bezugsziffer 22a bezeichnet und der Innenbereich mit Bezugsziffer 22b. Der Außenbereich 22a wird vorteilhafter weise von Außen und der Innenbereich von Innen abgetastet, um Abschattungen zu vermeiden. Um dies zu Erreichen ist der Drehtisch 7 bzw. dessen Drehachse vorzugsweise verlagerbar. So kann, wie in Fig. 2f dargestellt, der Außenbereich 22a des Teils 16 von Außen abgetastet werden und der Innenbereich 22b des Teils 15 von Innen (s.
Fig. 2g). In Fig. 2g ist im Vergleich zu Fig. 2f der Drehtisch 7 mit dem Modell verschoben worden. Die Verschiebung ist hierbei größer als in Fig. 2c. Die benötigte Verschiebung kann bis zum 100mm betragen. Andere Werte und Wertebereiche sind in Anspruch 11 aufgeführt.

Die Verlagerung kann auch soweit erfolgen, dass die Basisplatte bis zu einer Beschickungsposition erfolgt, an der das Einsetzten und Herausnehmen eines Modells leicht möglich ist. Die möglichen Werte und Wertebereiche sind in Anspruch 12 aufgeführt.

Die verschiedenen Verlagereinrichtungen (Anspruch 10 bis 12) können jeweils zu zweit oder alle drei zusammen durch ein und dieselbe Verlagerungseinrichtung gegeben sein. Jede der Verlagerungseinrichtungen kann aber auch unabhängig von den andern sein. Sie können sich auch jeweils überlagern (Beispiel: Zwei Lineartische so montiert, dass einer den anderen bewegen kann und die jeweilige Bewegungsrichtung jeweils gleich (oder auch verschieden) ist).

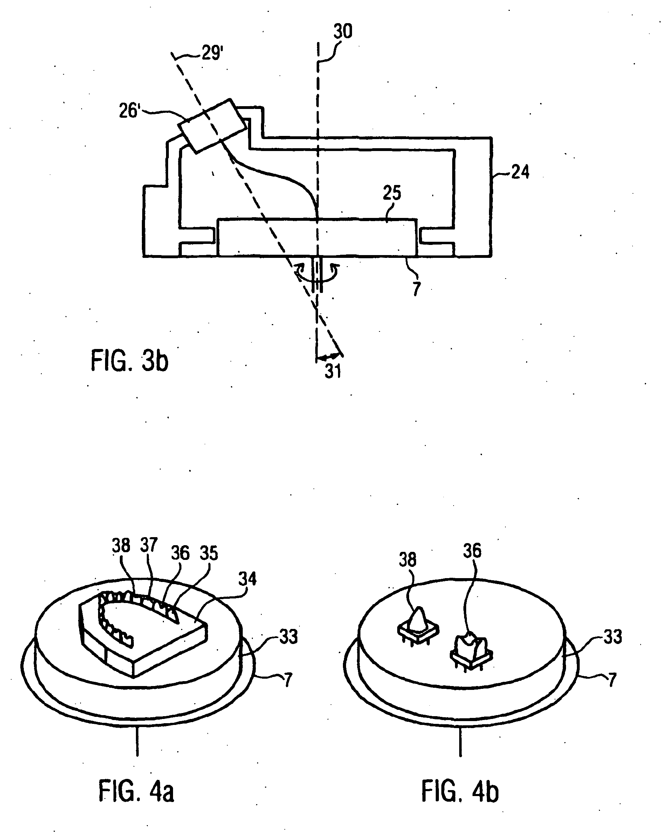

In den Fig. 3a und 3b sind Adapter 23 gezeigt, mit denen die Drehachse relativ zum Abtastbereich verlagert werden kann. In Fig. 3a ist der Drehteller 7 mit der Drehachse 30 dargestellt. Zum Abtasten eines kleinen Modellstücks, wie etwa das eines Einzelzahns, ist ein Drehelement 26 vorgesehen. Dieses kann entsprechend drehbar in einem Gehäuse 24 gelagert sein. Weiterhin weist der Adapter ein Element 25 auf, das mit dem Drehteller kraftschlüssig verbunden werden kann. Dies kann durch entsprechende Formgebung des Drehtellers und des Elements 25 beispielsweise durch Stifte und Löcher oder Nuten und Vorsprünge oder Ähnliches gegeben sein, als auch beispielsweise durch Magnetkraft zwischen dem Element 25 und dem Drehteller 7.

Das Drehelement 26 und das Element 25 sind mit einer (flexiblen) Welle 27 miteinander verbunden, die die Drehbewegung des Elements 25 auf das Drehelement 26 überträgt. Statt einer Welle 27 sind auch Zahnräder in einer entsprechenden Getriebeanordnung, Zahnriemen oder Ähnliches zur Übertragung der Drehbewegung möglich. Das Element 25 wird durch die Drehung des Drehtellers 7 selber gedreht. Auf dem Drehelement kann ein Zahnmodell angeordnet werden. Hierzu kann auf oder in dem Drehelement oder einem darauf befestigten Topf eine verformbare Masse (z. B. Knetmasse) vorgesehen sein.

Das Gehäuse 24 des Adapters 23 wird außerhalb des Drehtellers 7 ortsfest gehalten.

Wie in Fig. 3a zu erkennen, wird die Achse der relevanten Drehbewegung von der Drehachse 30 des Drehtellers 7 um den Abstand 28 zu der Drehachse 29 des Drehelements 26 hin verlagert. Die Verlagerung erfolgt in der Ebene, die durch den Abtastbereich 3 definiert wird.

Im Vergleich zu Fig. 3a ist in Fig. 3b das Drehelement 26' verkippt. Die Drehachse 29' des Drehelements 26' weist somit einen Winkel 31 gegenüber der Drehachse 30 auf. Dieser Winkel beträgt vorzugsweise zwischen 5° und 40°, beispielsweise 15° bis 25°, vorzugsweise ca. 20°. Der Winkel 31 sollte vorzugsweise zwischen dem Winkel liegen, den der Abtastbereichbereich 3 mit einer Senkrechten der Grundplatte 5 bzw. einer Senkrechten des Drehtellers 7 einnimmt.

In Fig. 4a ist ein Drehteller 7 mit einer darauf angeordneten Haltevorrichtung 33 gezeigt. Die Haltevorrichtung 33 umfasst eine verformbare Masse, wie etwa Knetmasse. Auf dieser Knetmasse kann durch Auflegen ein Zahnmodell angeordnet und durch die Knetmasse gehalten werden. Durch die Haftreibung zwischen dem Zahnmodell und der verformbaren Masse 33 ergibt sich eine genügende Halterung des Modells.

Die verformbare Masse ist in einer zylindrischen Form auf dem Drehteller aufgestellt. Der Drehteller kann aber auch einen Topf umfassen, in dem die verformbare Massen angeordnet ist.

Das Modell ist hier in einer beispielhaften Ausführungsform ein Sägezahnmodell. Bei diesem ist ein Modellteilhalter 34 vorgesehen, in den einzelne Modellteile, die einem oder mehreren Zahnplätzen entsprechen, mit Stiften oder sonstigen Mitteln eingesteckt sind. Die verschiedenen Modellteile tragen hier beispielhaft die Bezugsziffern 35 bis 38. Diese Modellteile 35 bis 38 können einzeln aus dem Modellteilhalter 34 herausgenommen werden. Sie können mit den Stiften in die verformbare Masse 33 eingedrückt werden. Sie werden dadurch, wenn auch lose, jedoch ausreichend gehalten, um dem Abtastvorgang zugefügt zu werden. Bevorzugt ist hierbei ein optisches Abtasten, da hierbei keine Kräfte auf die Modellteile ausgeübt werden.

Mit der verformbaren Masse 33 ist es somit möglich, sowohl ein gesamtes Sägezahnmodell als auch einzelne Modellteile davon zu halten, so dass nur ein einzelner Halter benötigt wird, ohne dass zwei jeweils verschiedene Halter benötigt werden.

Auf der verformbaren Massen kann eine Maske beispielsweise aus Papier oder Metall dauerhaft oder vorübergehend angeordnet werden, mit denen die ungefähren Positionen der einzelnen Teile vorgegeben werden.

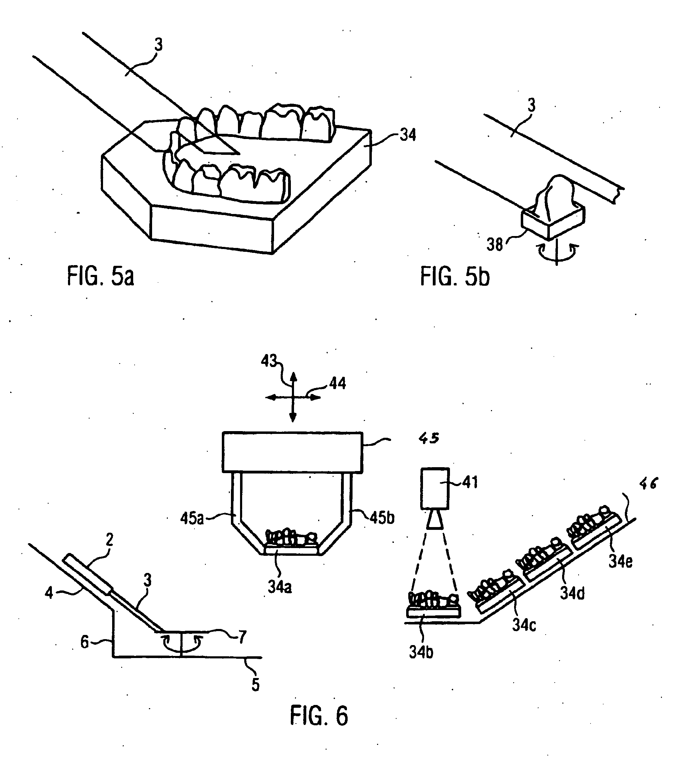

In Fig. 5a ist ein Sägezahnmodell gezeigt, das sich in dem Abtastbereich 3 befindet. Durch Verdrehung/Verschiebung des Sägezahnmodells kann die Relativposition der verschiedenen Modellteile gegeneinander in dem Modell erfasst werden. Das dargestellte Modell ist ein Sägezahnmodell mit einem Modellteilhalter 34.

Mit der in Fig. 5a dargestellten Konfiguration kann nur die Außenseite der Zähne abgetastet werden. Um auch die Innenseite abzutasten, muss das Sägezahnmodell entsprechend verschoben werden.

Vorteilhaft ist insbesondere ein Abtasten sowohl der Außenseiten der Zahnmodelle als auch der Innenseiten.

Nachdem das gesamte Zahnmodell optisch abgetastet wurde, werden die Modellteile des Sägezahnmodells aus dem Modellteilhalter 34 herausgenommen. Sie werden dann, wie in Fig. 5b dargestellt, einzeln abgetastet. Das Zahnmodell 38 kann hierbei entweder während der Drehung desselben abgetastet werden, um so alle Seiten des Zahnmodells abzutasten, oder das Zahnmodell kann durch den streifenförmigen Abtastbereich 3 linear durchverschoben werden und zwischen den einzelnen Durchschiebvorgängen gedreht werden. Auch dadurch ist es dann durch ein digitales Matchen der gewonnenen Daten möglich, ein vollumfängliches digitales Abbild des Zahnmodells 38 zu erhalten.

Die im in Fig. 5b dargestellten Schritt gewonnenen Daten können dann mit den Daten, die im in Fig. 5A dargestellten Schritt gewonnen wurden, digital verarbeitet werden, um so mit einem Matching-Verfahren ein möglichst detailgetreues Abbild des Zahnmodells digital zu erhalten.

In Fig. 6 ist eine Vorrichtung zum Abtasten von Zahnmodellen gezeigt, die eine Beschickungsanlage aufweist. Die Beschickungsanlage umfasst eine Kamera 41, mit der Zahnmodelle 34a bis 34e jeweils einzeln oder zusammen erfasst werden können. Die Zahnmodelle werden auf einer Förderstrecke 46, die als Rutsche oder als Förderband oder Ähnliches ausgebildet sein kann, gespeichert. Mit einem Roboterarm 45 können die einzelnen Zahnmodelle 34a bis 34e in die Vorrichtung zum Abtasten von Zahnmodellen eingesetzt werden. Der Roboterarm 45 kann hierbei in Richtung 43 auf und ab und in Richtung 44 nach rechts und links bewegt werden. Auch eine Bewegung quer zur Zeichenebene ist möglich, um maximale Flexibilität zu haben.

Der Roboterarm kann ein Zahnmodell 34a mit Greiferarmen 45a und 45b greifen. Dadurch ist es möglich, das Zahnmodell 34a in die Vorrichtung zum Abtasten einzusetzen oder herauszunehmen. Der Roboterarm ist vorzugsweise so ausgebildet, dass er auch einzelne Modellteile eines Sägezahnmodells aus einem Modellteilhalter herausnehmen kann. Damit können dann auch einzelne Modellteile automatisiert einem Abtastvorgang zugeführt werden.

Die Vorrichtung ist vorteilhafter Weise so ausgebildet, dass mit dem Roboterarm oder einem sonstigen mechanischen automatisierten Bedienelement alle Modelle bzw. Modellteile ohne menschliches Zutun den verschiedenen Abtastvorgängen zugeführt werden können.

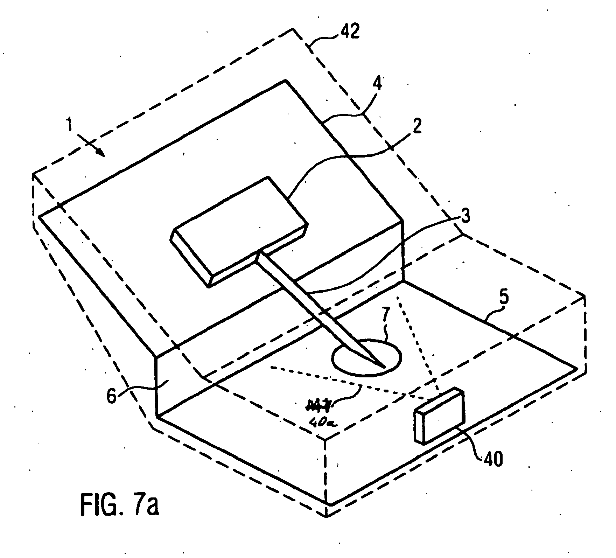

In Figur 7a ist schematisch eine Vorrichtung zum Abtasten von Zahnmodellen 1 gezeigt. Die Abtastvorrichtung 1 verfügt über einen Deckel 42, der die optische Abtasteinrichtung 2 abdecken kann. Der Deckel 42 dient sowohl dazu Umgebungslicht zu reduzieren bzw. auszuschließen, als auch dazu die optischen Komponenten vor Staub o. ä. zu schützen.

In Figur 7a ist die Kamera 40 an dem Deckel 42 befestigt und blickt auf den Abtastbereich der Abtasteinrichtung 2. Das Blickfeld ist größer als der Abtastbereich, so dass auch ein Zahnmodell, das sich nicht im Abtastbereich findet, von der Kamera aufgenommen werden kann. Mit Hilfe der Kamera 40 kann das Zahnmodell von einem Benutzer an die richtige Position in dem Abtastbereich und auch in der richtigen Orientierung positioniert werden. Die Darstellung in Fig. 7a ermöglicht insbesondere eine Einstellung der z-Position (Höhe über der Grundplatte 5).

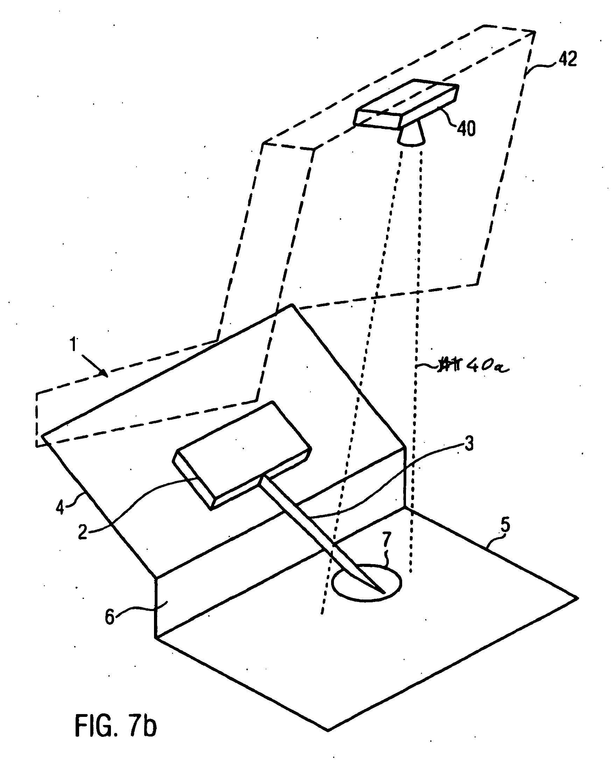

In Figur 7b ist die Vorrichtung aus Figur 7a mit geöffnetem Deckel 42 gezeigt. Der Deckel wird in dieser Position beispielsweise durch Stützen, Pneumatikfedern (beides nicht dargestellt) oder ähnliches gehalten. Die Kamera 40 blickt hierbei nun von oben auf den Abtastbereich der Abtasteinrichtung 2. Die Blickrichtung 40a der Kamera 40 muss nicht, wie in Figur 7b dargestellt, genau senkrecht von oben sein, diese kann auch schräg sein. In der Deckelstellung von Fig. 7b kann insbesondere die x-y-Position einjustiert werden.

Die Befestigung der Kamera 40 an dem Deckel 42 erübrigt weitere Komponenten zum Halten der Kamera 40.

## Patentansprüche

1. Vorrichtung zum Abtasten eines Zahnmodells wobei
eine Kamera (40) zum Aufnehmen von Bildern eines oder mehrerer Vorrichtungsteile (7) und/oder eines oder mehrere Modelle (11), wie Sägezahnmodelle oder Teilen davon vorgesehen ist, wobei die Kamera (40) von einer Justagehilfe für die Positionierung des Zahnmodells umfasst ist und die Vorrichtung eine Verdunklungseinrichtung umfasst, die die abzutastenden Objekte abschattet und vor Umgebungslicht schützt, wobei die Kamera (40) in definierter Lage zu einem Abtastbereich angeordnet ist und auf eine Basisplatte (5) blickt.

2. Vorrichtung nach Anspruch 1, **dadurch gekennzeichnet, dass** in einer Bilddarstellung des Kamerabildes Informationen angezeigt werden können, wie etwa Linien oder Pfeile, mit denen notwendige Korrekturen der Positionierung des Zahnmodells (11) auf der Basisplatte (5) erkennbar gemacht werden.

3. Vorrichtung nach Anspruch 2, **dadurch gekennzeichnet, dass** eine Sollposition zusammen mit der Ist-Position dargestellt wird, wobei die Sollposition beispielsweise durch schematische Linien angedeutet wird.

4. Vorrichtung nach einem der Ansprüche 1 bis 3, **dadurch gekennzeichnet, dass** die Justagehilfe zum Festlegen der Höhe und/oder der Position des Zahnmodells (11) und/oder eines einzelnen Modellteils in der Oberflächenebene der Basisplatte (5) vorgesehen ist.

5. Vorrichtung nach einem der Ansprüche 1 bis 4, **dadurch gekennzeichnet, dass** die Kamera (40) auf eine Position eines Zahnmodells (11) im Abtastbereich einer Abtasteinrichtung (2) der Vorrichtung (1) gerichtet ist.

6. Vorrichtung nach einem der Ansprüche 1 bis 5, **dadurch gekennzeichnet, dass** die Kamera (40) an einem Deckel (42) befestigt ist, wobei der Deckel (42) beispielsweise zum Abdecken des Zahnmodells (11) dient.

7. Vorrichtung nach Anspruch 6, **dadurch gekennzeichnet, dass** der Deckel (42) in zwei definierte Positionen bewegbar ist, wobei eine Position eine Geöffnet-Stellung und die andere Position eine Geschlossen-Stellung ist und die Kamera (40) in wenigstens einer der beiden vorzugsweise in beiden Positionen auf ein Zahnmodell (11) in einem Abtastbereich der Vorrichtung gerichtet ist.

8. Vorrichtung nach einem der Ansprüche 1 bis 7, **dadurch gekennzeichnet dass** Beleuchtungsmittel, zum Beleuchten eines Zahnmodells in einer Abtastposition vorgesehen sind, wobei die Beleuchtungsmittel vorzugsweise LEDs umfassen.

9. Vorrichtung nach einem der Ansprüche 1 bis 8, **dadurch gekennzeichnet, dass** die Kamera (40) zur Fernwartung eingesetzt werden kann.

10. Vorrichtung nach einem der Ansprüche 1 bis 9, **dadurch gekennzeichnet, dass** die Kamera (40) 2D-Bilder aufnimmt.

11. Vorrichtung nach einem der Ansprüche 1 bis 10, **dadurch gekennzeichnet, dass** Justiermittel vorgesehen sind, mit denen ein Bediener die Position eines Zahnmodells zur Justage verändern kann, wobei die Justiermittel vorzugsweise über einen Computer angesteuert werden können.

12. Vorrichtung nach einem der Ansprüche 1 bis 11, **dadurch gekennzeichnet, dass** die Kamera (40) mindestens 10.000 Pixel, vorzugsweise mindestens 100.000 oder noch bevorzugter mindestens 1.000.000 Pixel hat.

13. Vorrichtung nach einem der Ansprüche 1 bis 12, **dadurch gekennzeichnet, dass** das Zahnmodell ein Sägezahnmodell ist.

14. Vorrichtung nach einem der Ansprüche 1 bis 13, **dadurch gekennzeichnet, dass** die Verdunklungseinrichtung als Verdunklungseinrichtung für eine optische Abtasteinrichtung, wie etwa ein Deckel und/oder ein Tunnel vorgesehen ist.

15. Vorrichtung nach einem der Ansprüche 1 bis 14, **dadurch gekennzeichnet, dass** die Vorrichtung über einen Internetanschluss verfügt, vorzugsweise für Internet-Updates von Software und/oder Fernwartung der Vorrichtung.

16. Vorrichtung nach einem der Ansprüche 1 bis 15, **dadurch gekennzeichnet, dass** eine Kamera zum Aufnehmen von Bildern eines oder mehrere Vorrichtungsteile und/oder einem oder mehrere Modelle, wie Sägezahnmodellen oder Teilen davon vorgesehen ist.

## Claims

1. Device for scanning a tooth model, wherein
a camera (40) for recording images of one or more device part(s) (7) and/or one or more model(s) (11), such as sawtooth models or parts thereof, is provided, wherein the camera (40) is encompassed by an adjusting aid for the positioning of the tooth model and the device comprises a darkening device which shades the objects to be scanned and protects against ambient light, wherein the camera (40) is arranged in a defined position with respect to a scanning zone and looks onto a base plate (5).

2. Device according to claim 1, **characterised in that** in one image representation of the camera image information may be displayed, such as lines or arrows, with which necessary corrections of the positioning of the tooth model (11) can be rendered visible on the base plate (5).

3. Device according to claim 2, **characterised in that** a desired position is displayed together with the actual position, the desired position being indicated by way of example by schematic lines.

4. Device according to any one of claims 1 to 3, **characterised in that** the adjusting aid is provided in the surface plane of the base plate (5) for fixing the height and/or the position of the tooth model (11) and/or an individual model part.

5. Device according to any one of claims 1 to 4, **characterised in that** the camera (40) is directed at a position of a tooth model (11) in the scanning zone of a scanner (2) of the device (1).

6. Device according to any one of claims 1 to 5, **characterised in that** the camera (40) is secured to a cover (42), the cover (42) being used by way of example for covering the tooth model (11).

7. Device according to claim 6, **characterised in that** the cover (42) can be moved into two defined positions, with one position being an open position and the other position being a closed position, and the camera (40) is directed in at least one of the two, preferably in both positions, at a tooth model (11) in a scanning zone of the device.

8. Device according to any one of claims 1 to 7, **characterised in that** illumination means for illuminating a tooth model in a scanning position are provided, the illumination means preferably including LEDs.

9. Device according to any one of claims 1 to 8, **characterised in that** the camera (40) can be used for remote maintenance.

10. Device according to any one of claims 1 to 9, **characterised in that** the camera (40) records 2D images.

11. Device according to any one of claims 1 to 10, **characterised in that** adjusting means are provided with which a user can change the position of a tooth model for adjustment, it being possible to control the adjusting means preferably by way of a computer.

12. Device according to any one of claims 1 to 11, **characterised in that** the camera (40) has at least 10,000 pixels, preferably at least 100,000 or even more preferably 1,000,000 pixels.

13. Device according to any one of claims 1 to 12, **characterised in that** the tooth model is a sawtooth model.

14. Device according to any one of claims 1 to 13, **characterised in that** the darkening device is provided as a darkening device for an optical scanner, such as a cover and/or a tunnel.

15. Device according to any one of claims 1 to 14, **characterised in that** the device has an Internet connection, preferably for Internet updates of software and/or remote maintenance of the device.

16. Device according to any one of claims 1 to 15, **characterised in that** a camera for recording images of one or more device part(s) and/or one or more model(s), such as sawtooth models or parts thereof, is provided.

## Revendications

1. Dispositif pour palper un modèle de dent, étant précisé
qu'il est prévu une caméra (40) pour enregistrer des images d'un ou plusieurs éléments de dispositif (7) et/ou d'un ou plusieurs modèles (11) tels que des modèles en dents de scie ou des éléments de ceux-ci, la caméra (40) faisant partie d'un dispositif auxiliaire d'ajustement pour le positionnement du modèle de dent, et le dispositif comprenant un appareil d'obscurcissement qui projette une ombre sur les objets à palper et les protège de la lumière ambiante, la caméra (40) étant disposée par rapport à une zone de palpage dans une position définie, et étant dirigée vers une plaque de base (5).

2. Dispositif selon la revendication 1, **caractérisé en ce que** des informations telles que des lignes ou des flèches, qui peuvent faire apparaître des corrections nécessaires du positionnement du modèle de dent (11) sur la plaque de base (5), peuvent être affichées sur une représentation graphique de l'image de la caméra.

3. Dispositif selon la revendication 2, **caractérisé en ce qu'**une position théorique est représentée avec la position réelle, la position théorique étant indiquée par exemple par des lignes schématiques.

4. Dispositif selon l'une des revendications 1 à 3, **caractérisé en ce que** le dispositif auxiliaire d'ajustement est prévu pour fixer la hauteur et/ou la position du modèle de dent (11) et/ou d'un élément de modèle individuel dans le plan superficiel d'une plaque de base (5).

5. Dispositif selon l'une des revendications 1 à 4, **caractérisé en ce que** la caméra (40) est dirigée vers une position d'un modèle de dent (11) dans la zone de palpage d'un dispositif de palpage (2) du dispositif (1).

6. Dispositif selon l'une des revendications 1 à 5, **caractérisé en ce que** la caméra (40) est fixée à un couvercle (42), le couvercle (42) servant par exemple à couvrir le modèle de dent (11).

7. Dispositif selon la revendication 6, **caractérisé en ce que** le couvercle (42) est apte à être amené dans deux positions définies, une position étant une position ouverte et l'autre une position fermée, et la caméra (40) étant dirigée dans l'une au moins des deux positions, de préférence dans les deux positions, vers un modèle de dent (11) dans une zone de palpage du dispositif.

8. Dispositif selon l'une des revendications 1 à 7, **caractérisé en ce qu'**il est prévu des moyens d'éclairage pour éclairer un modèle de dent dans une position de palpage, les moyens d'éclairage comprenant de préférence des diodes lumineuses.

9. Dispositif selon l'une des revendications 1 à 8, **caractérisé en ce que** la caméra (40) peut être utilisée pour la maintenance à distance.

10. Dispositif selon l'une des revendications 1 à 9, **caractérisé en ce que** la caméra (40) enregistre des images en deux dimensions.

11. Dispositif selon l'une des revendications 1 à 10, **caractérisé en ce qu'**il est prévu des moyens d'ajustement grâce auxquels un utilisateur peut modifier la position d'un modèle de dent, en vue d'un ajustement, les moyens d'ajustement pouvant de préférence être commandés par l'intermédiaire d'un ordinateur.

12. Dispositif selon l'une des revendications 1 à 11, **caractérisé en ce que** la caméra (40) a au moins 10.000 pixels, de préférence au moins 100.000 ou plus particulièrement au moins 1.000.000 pixels.

13. Dispositif selon l'une des revendications 1 à 12, **caractérisé en ce que** le modèle de dent est constitué par un modèle en dents de scie.

14. Dispositif selon l'une des revendications 1 à 13, **caractérisé en ce que** l'appareil d'obscurcissement est prévu sous la forme d'un appareil d'obscurcissement pour un dispositif de palpage optique, tel qu'un couvercle et/ou un tunnel.

15. Dispositif selon l'une des revendications 1 à 14, **caractérisé en ce que** le dispositif dispose d'une connexion Internet, de préférence pour des mises à jour de logiciel par Internet et/ou pour une maintenance à distance du dispositif.

16. Dispositif selon l'une des revendications 1 à 15, **caractérisé en ce qu'**il est prévu une caméra pour enregistrer des images d'un ou plusieurs éléments de dispositif et/ou d'un ou plusieurs modèles, comme des modèles en dents de scie, ou des éléments de ceux-ci.
